# EUROPEAN PATENT APPLICATION

(11) **EP 4 456 380 A1**
(43) Date of publication of application: **30.10.2024**
(21) Application number: 22909380.2
(22) Date of filing: 07.09.2022
(51) Int. Cl.: H02K 1/276, H02K 29/03

(54) **PERMANENT MAGNET ELECTRIC MOTOR HAVING REDUCED COGGING TORQUE RIPPLE**

(30) Priority: 24.12.2021 CN 202111597968
(71) Applicant: Ningbo Hengshuai Co., Ltd., Ningbo, Zhejiang 315032 (CN)
(72) Inventor: ZHOU, Jianmin, Ningbo, Zhejiang 315032 (CN); XU, Hengshuai, Ningbo, Zhejiang 315032 (CN); HE, Hailiang, Ningbo, Zhejiang 315032 (CN); LIU, Peihai, Ningbo, Zhejiang 315032 (CN)
(74) Representative: Ipey
(86) International application number: PCT/CN2022/117669
(87) International publication number: WO 2023/116057

(57) **Abstract**

A permanent magnet electric motor having reduced cogging torque ripple, comprising a stator component, permanent magnets and a rotor component, wherein the rotor component is mounted in the center of the stator component, and an air gap is formed between an outer circumferential surface of the rotor component and an inner cambered surface of the stator component; and each permanent magnet has a cross-section of isosceles trapezoid, the permanent magnet is fixed in the rotor component and has a central line coinciding with the radius line of the rotor component, the magnetic lines of the permanent magnet are symmetric with reference to the central line of the permanent magnet and form included angles of 90° with a left side face of the trapezoid or a right side face of the trapezoid of the permanent magnet, and the left side face of the trapezoid and the right side face of the trapezoid of the permanent magnet respectively form included angles with the central line of the permanent magnet. According to the present disclosure, by means of changing the shape of the permanent magnet, the cogging torque ripple of the permanent magnet electric motor can be reduced in order to reduce the vibration and noise caused by the cogging torque ripple and the fluctuation in speed, so that the permanent magnet electric motor runs stably.

## Description

### TECHNICAL FIELD

The present disclosure relates to an electric motor, and in particular to a permanent magnet electric motor having reduced cogging torque ripples.

### BACKGROUND

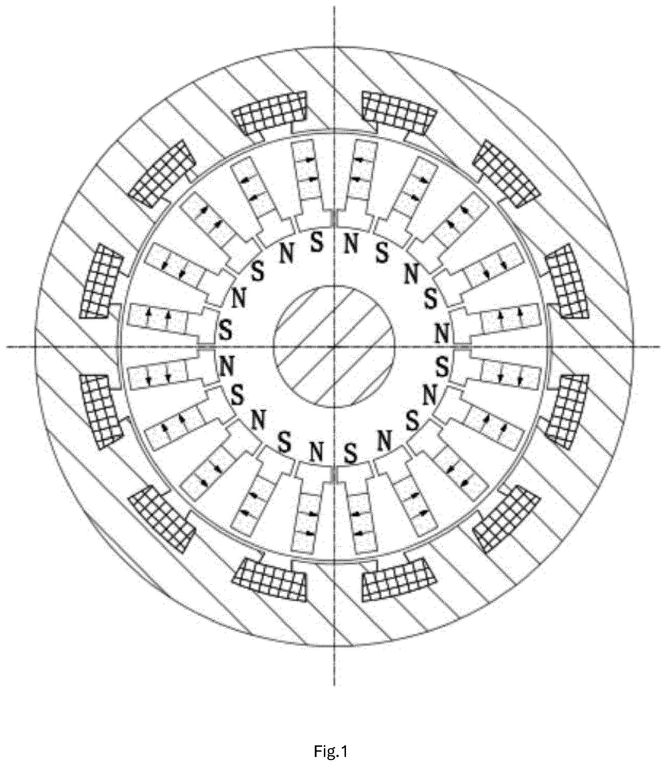

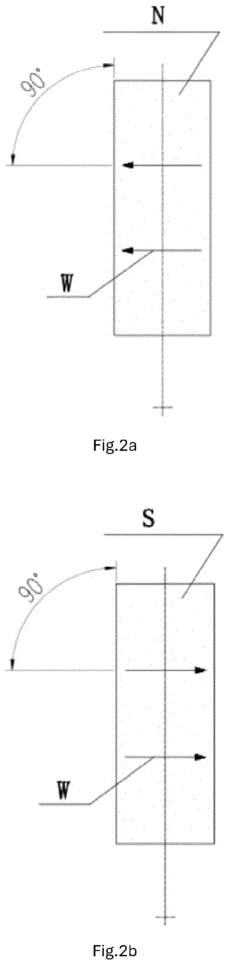

As shown in FIGS. 1 to 3, the existing permanent magnet electric motors generally include a stator component, permanent magnets and a rotor component, the crosssections of the permanent magnets used are basically of a rectangular structure, the permanent magnets include N-pole permanent magnets and S-pole permanent magnets, and the N-pole permanent magnets and S-pole permanent magnets are alternately fixed in the rotor component. Such kind of permanent magnet electric motors has large cogging torque ripple(pulsation/fluctuation), which causes the permanent magnet electric motors to generate vibration, noise, and speed fluctuation occurs, thereby the permanent magnet electric motors cannot run smoothly, and the performance of the permanent magnet electric motors is adversely affected. Especially in variable speed drives, if the cogging torque ripple frequency is the same with the mechanical resonance frequency of the stator or rotor, the vibration and noise generated by the cogging torque will also be amplified. Furthermore, the existence of cogging torque ripple also affects the low-speed performance in speed control systems and the high-precision positioning in position control systems of the permanent magnet electric motors.

### SUMMARY

The technical problem to be solved by the present disclosure is to provide a permanent magnet electric motor having reduced cogging torque ripple that has smaller cogging torque ripple and vibration/noise in view of the above-mentioned shortcomings of the prior art.

The technical solution adopted by the present disclosure to solve the above technical problems is: A permanent magnet electric motor having reduced cogging torque ripple, comprising a stator component, permanent magnets and a rotor component, wherein the rotor component is mounted in a center of the stator component, and an air gap is formed between an outer circumferential surface of the rotor component and an inner cambered surface of the stator component; wherein each permanent magnet has a cross-section of isosceles trapezoid, the permanent magnet is fixed in the rotor component and has a central line coinciding with a radius line of the rotor component, the magnetic lines of the permanent magnet are symmetric with reference to the central line of the permanent magnet and form included angles of 90° with a left side face of the trapezoid or a right side face of the trapezoid of the permanent magnet, and the left side face of the trapezoid and the right side face of the trapezoid of the permanent magnet respectively form included angles with the central line of the permanent magnet.

According to some embodiments of the present disclosure, the included angles formed by the left side face of the trapezoid and the right side face of the trapezoid of the permanent magnet with the central line of the permanent magnet are 5 to 20°, preferably 8°.

According to some embodiments of the present disclosure, the permanent magnets are fixed in trapezoidal slots of the rotor component.

According to some embodiments of the present disclosure, a top window and a bottom window are respectively provided at a top and a bottom of the trapezoidal slot of the rotor component to play a role in magnetic isolation and reduce magnetic flux leakage.

According to some embodiments of the present disclosure, the left side face of the trapezoid and the right side face of the trapezoid of the permanent magnet are respectively attached and fixed to a left side face and a right side face of the trapezoidal slot of the rotor component.

According to some embodiments of the present disclosure, the left side face of the trapezoid and the right side face of the trapezoid of the permanent magnet are respectively adhered to a left side face and a right side face of the trapezoidal slot of the rotor component through an adhesive.

According to some embodiments of the present disclosure, the permanent magnet is of a split structure, is split along the central line, and is composed of a left part of the permanent magnet and a right part of the permanent magnet, which facilitates manufacturing.

According to some embodiments of the present disclosure, the permanent magnets include N-pole permanent magnets and S-pole permanent magnets, and the N-pole permanent magnets and the S-pole permanent magnets are alternately fixed in the rotor component.

Compared with the existing technology, the present disclosure has the following advantages: by changing the shape of the permanent magnet, the magnetic force lines (magnetic lines) are symmetrically distributed with reference to the central line of the permanent magnet, to both sides of the central line, and the magnetic lines respectively form included angles of 90° with a left side face of the trapezoid or a right side face of the trapezoid of the permanent magnet, and the left side face of the trapezoid and the right side face of the trapezoid of the permanent magnet respectively form included angles with the central line of the permanent magnet, thereby reducing the cogging torque ripple of the permanent magnet motor and reducing the vibration and noise caused by the cogging torque ripple, reducing the speed fluctuation, to make the permanent magnet motor run smoothly, and improve the low-speed performance in the speed control system and the high-precision positioning in the position control system of the permanent magnet motor.

### BRIEF DESCRIPTION OF THE DRAWINGS

FIG. 1 is a cross-sectional view of a permanent magnet electric motor in the prior art.
FIGS. 2a and 2b are schematic views showing the magnetizing directions of the permanent magnet of the permanent magnet electric motor in the prior art.
FIG. 3 is a magnetic force line distribution diagram of the permanent magnet electric motor in the prior art.
FIG. 4 is a schematic cross-sectional view of a permanent magnet electric motor having reduced cogging torque ripple according to Embodiment 1 of the present disclosure.
FIGS. 5a and 5b are schematic views showing the magnetic force lines and magnetization directions of the permanent magnet in Embodiment 1 of the present disclosure.
FIG. 6 is a magnetic force line distribution diagram of a permanent magnet electric motor having reduced cogging torque ripple according to Embodiment 1 of the present disclosure.
FIG. 7 is a schematic cross-sectional view of a permanent magnet electric motor having reduced cogging torque ripple according to Embodiment 2 of the present disclosure.
FIGS. 8a and 8b are schematic views showing the magnetic force lines and magnetization directions of the permanent magnet in Embodiment 2 of the present disclosure.
FIG. 9 is a magnetic force line distribution diagram of a permanent magnet electric motor having reduced cogging torque ripple according to Embodiment 2 of the present disclosure.
FIG. 10 is a waveform graph of cogging torque ripple of a conventional permanent magnet electric motor.
FIG. 11 is a waveform graph of cogging torque ripple of the permanent magnet electric motor according to Embodiment 1 of the present disclosure.

### DETAILED DESCRIPTION OF EMBODIMENTS

The present disclosure will be further described below in conjunction with the accompanying drawings and embodiments.

### Embodiment 1

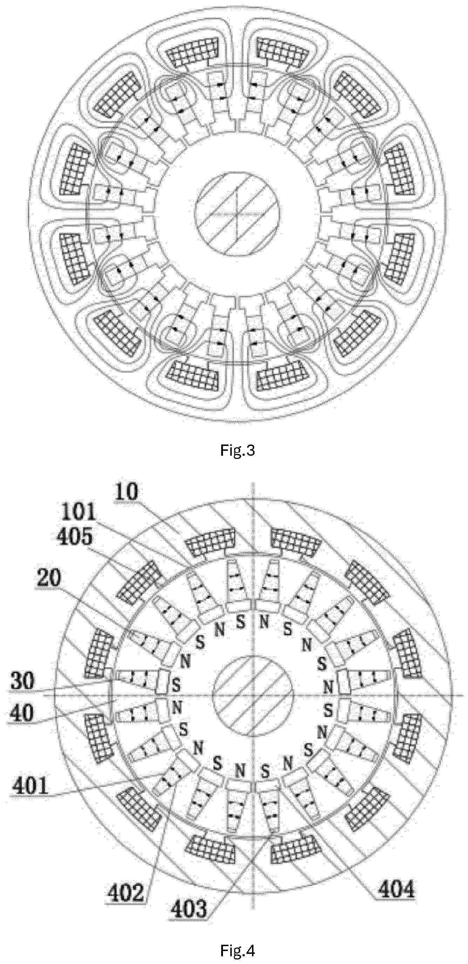

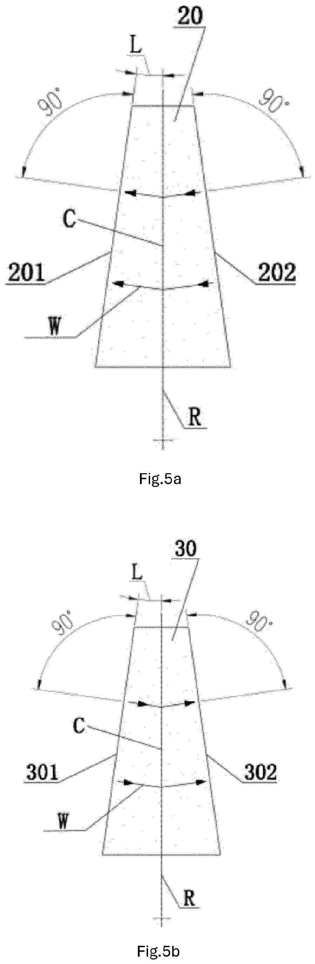

As shown in FIGS. 4 and 5, a permanent magnet electric motor capable of reducing cogging torque ripple includes a stator component 10, N-pole permanent magnets 20, S-pole permanent magnets 30 and a rotor component 40.

The rotor component 40 is installed in the center of the stator component 10 , and an air gap is formed between the outer circumferential surface 405 of the rotor component and the cambered surface 101 of the stator component.

The cross-section of the N-pole permanent magnet 20 is an isosceles trapezoid, and its left side face 201 and right side face 202 are respectively attached and fixed to the left side face and the right side face of the trapezoidal slot provided in the rotor component, and an adhesive is used to fix the N-pole permanent magnet in the trapezoidal slot of the rotor component, so that it is more firmly fixed.

The above-mentioned N-pole permanent magnet 20 is fixed in the trapezoidal slot of the rotor component, and the central line C of the N-pole permanent magnet is consistent with the radius line R of the rotor component.

The magnetic force lines W of the above-mentioned N-pole permanent magnet are symmetrically distributed with reference to the central line C of the N-pole permanent magnet, to both sides of the central line C, and forms included angles of 90° with the left side face and the right side face of the trapezoid of the N-pole permanent magnet respectively. The direction of the path of the magnetic force lines W is determined by the magnetization direction.

The angle between the left side face 201 or the right side face 202 of the trapezoid of the N-pole permanent magnet and the central line C of the permanent magnet is L. In this embodiment, the angle L is 8°.

In the same way, the S-pole permanent magnet 30 has the same structure as the N-pole permanent magnet and is fixed on the rotor component in the same way, except that the path of the magnetic lines W is in an opposite direction, that is, the magnetization direction is opposite.

The angle between the left side face 301 or the right side face 302 of the trapezoid of the S-pole permanent magnet and the central line C of the permanent magnet is L. In this embodiment, the angle L is 8°.

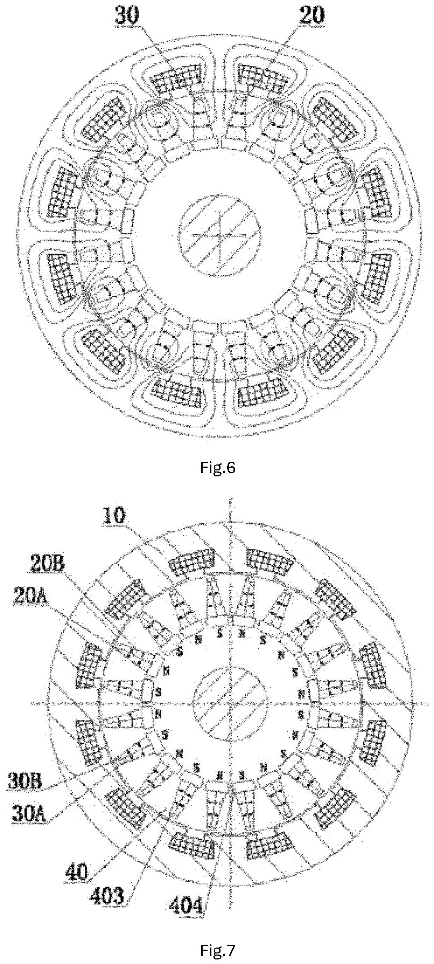

As shown in FIG. 6, the magnetic lines W of the N-pole permanent magnet of the above-mentioned permanent magnet electric motor having reduced cogging torque ripple enter the rotor component from the left side face of the trapezoid, pass through the rotor component, flow to the air gap, and enter the inner cambered surface of the stator component after passing through the air gap, then flow to the inner cambered surface after passing through the stator component, pass through the air gap again, enter the rotor component, and then return to the right side face of the trapezoid of the N-pole permanent magnet, thereby forming a complete magnetic force line loop.

In the same way, the magnetic line loop distribution of the S-pole permanent magnet is the same as that of the N-pole permanent magnet, except that the magnetic lines enter the rotor component from the right side face of the trapezoid of the S-pole permanent magnet and finally return to the left side face of the trapezoid of the S-pole permanent magnet.

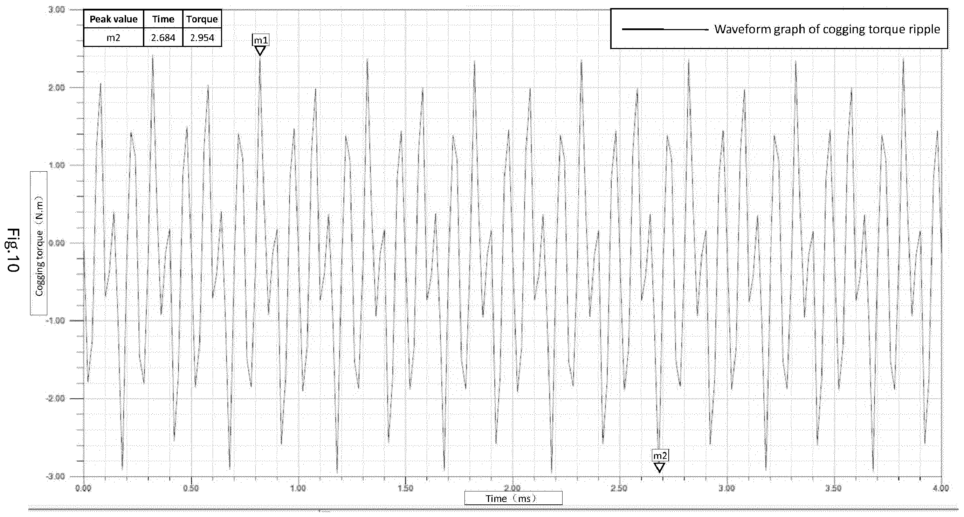

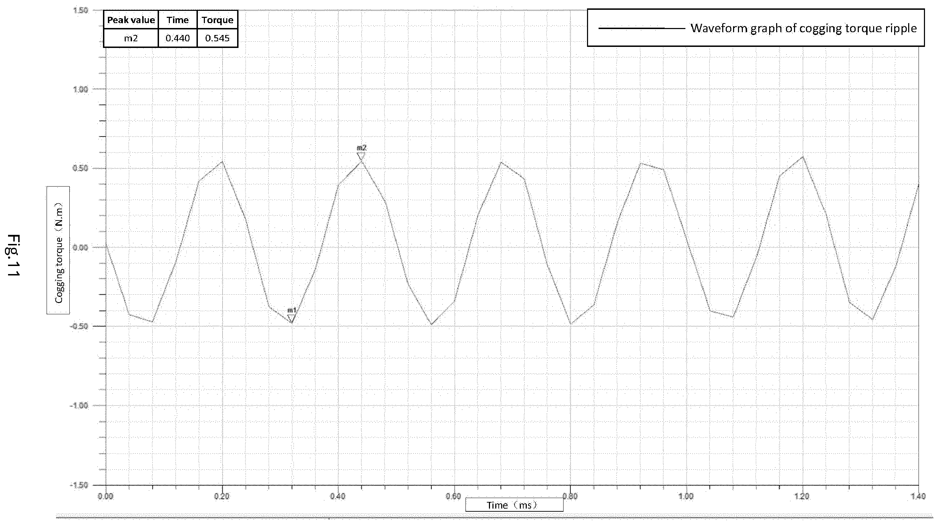

As shown in FIGS. 10 and 11, the cross-section of the permanent magnet of the conventional permanent magnet electric motor is rectangular, and the maximum peak value in the cogging torque ripple waveform of the motor is Tmax=2.954N·m. For the permanent magnet electric motor in Embodiment 1 that can reduce the cogging torque ripple, the angle between the left side face of the trapezoid and the right side face of the trapezoid and the central line C of the permanent magnet is 8° respectively, the maximum peak value in the cogging torque ripple waveform of the motor is Tmax=0.545N·m. The cogging torque ripple is reduced at a ratio as follows: cogging torque ripple reduction ratio = (2.954-0.545) ÷ 2.954 × 100% = 81.55%. It reduces the cogging torque ripple of the permanent magnet electric motor, reduces the vibration and noise caused by the cogging torque ripples, reduces speed fluctuation, makes the motor run smoothly, thereby improving the low-speed performance in the speed control system and the high-precision positioning in the position control system of the motor, to meet the use requirements.

The present disclosure also studies the angle L between the left side face of the trapezoid/the right side face of the trapezoid and the central line C of the permanent magnet. The change diagram of the cogging torque ripple of the motor with time in this embodiment is shown in FIG. 11. The relationship between the angle L and the cogging torque ripple of the motor is shown in Table 1. From Table 1, it can be seen that the included angle L is preferably 5 to 20°, and the best is 8°.

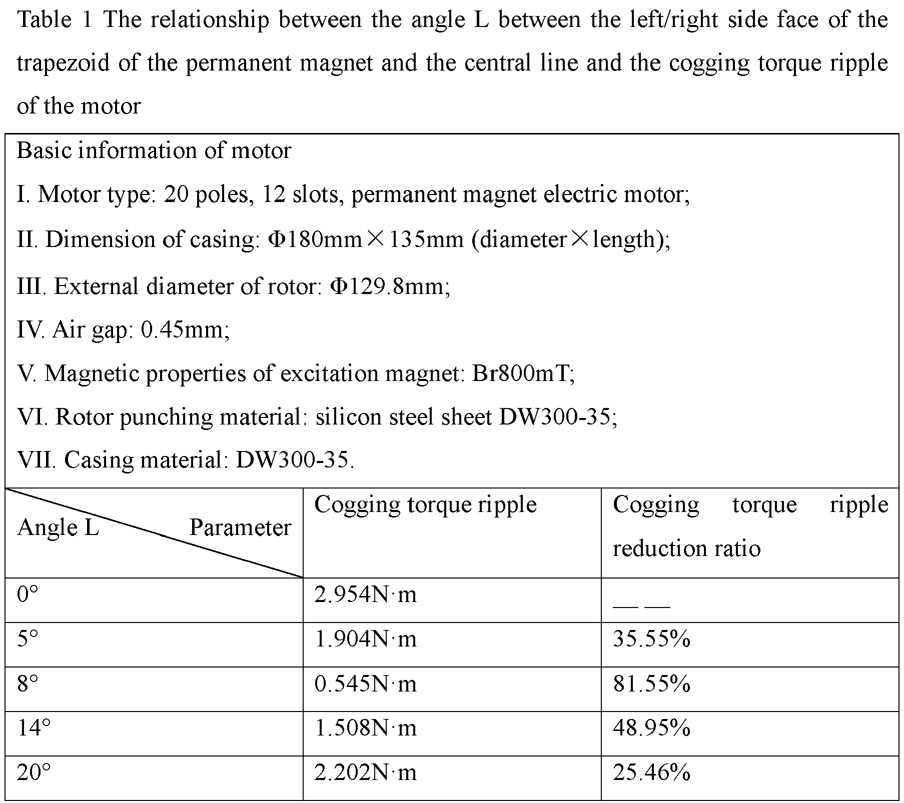

### Embodiment 2

As shown in FIGS. 7 to 9, it is another permanent magnet electric motor that can reduce cogging torque ripple, it has a split permanent magnet, but other structures are exactly the same as the permanent magnet electric motor in Embodiment 1.

More specifically, the permanent magnets are divided into N-pole permanent magnets and S-pole permanent magnets. Each N-pole permanent magnet is composed of an N-pole permanent magnet left part 20A and an N-pole permanent magnet right part 20B. Each S-pole permanent magnet is composed of an S-pole permanent magnet left part 30A and an S-pole permanent magnet right part 30B.

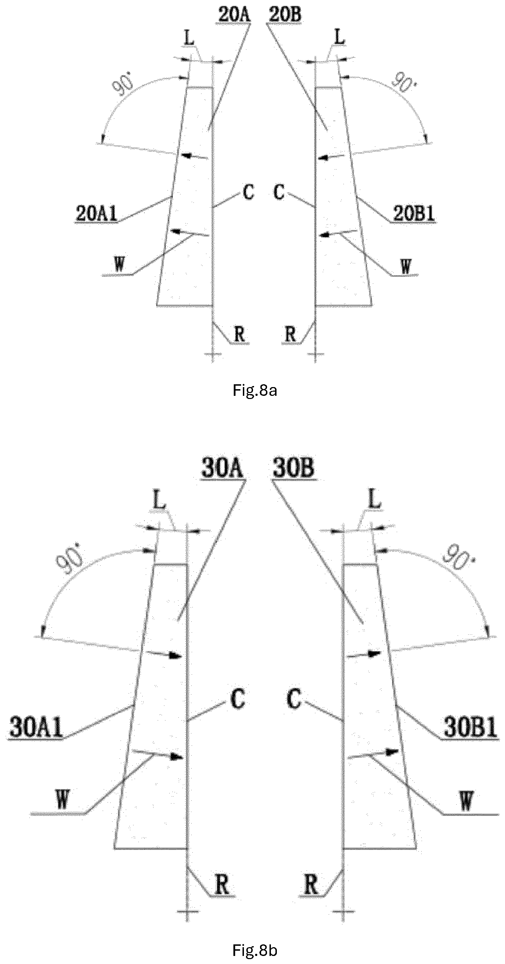

The above-mentioned split N-pole permanent magnet may be separated along its central line and it is made up of the N-pole permanent magnet left part and the N-pole permanent magnet right part bonded together. The magnetizing direction of the N-pole permanent magnet left part is from the central line C to the left side face 20A1 of the trapezoid, and it forms an included angle of 90° with the left side face 20A1 of the trapezoid. The left side face 20A1 of the trapezoid forms an included angle L with the central line C. The magnetizing direction of the N-pole permanent magnet right part is from the right side face 20B1 of the trapezoid to the central line C, and it forms an included angle of 90° with the right side face of the trapezoid, and the right side face of the trapezoid forms an included angle L with the central line. This structure is more convenient for magnetizing the N-pole permanent magnet left part and the N-pole permanent magnet right part, as shown in FIG. 8a.

Similarly, the above-mentioned split S-pole permanent magnet 30 may be separated along its central line and it is made up of the S-pole permanent magnet left part 30A and the S-pole permanent magnet right part 30B bonded together. Except for the opposite direction of magnetization, the rest are exactly the same as the structure of the N-pole permanent magnet left part and the N-pole permanent magnet right part.

The magnetization direction of the left part of the above-mentioned split S-pole permanent magnet is from the left side face 30A1 of the trapezoid to the central line C, and it forms an included angle of 90° with the left side face 30A1 of the trapezoid. The left side face 30A1 of the trapezoid forms an included angle L with the central line C. The magnetization direction of the right part of the S-pole permanent magnet is from the central line C to the right side face 30B1 of the trapezoid, and it forms an angle of 90° with the right side face 30B1 of the trapezoid. The right side face of the trapezoid forms an angle L with the central line C. This structure is more convenient for magnetizing the S-pole permanent magnet left part and the S-pole permanent magnet right part, as shown in FIG. 8b.

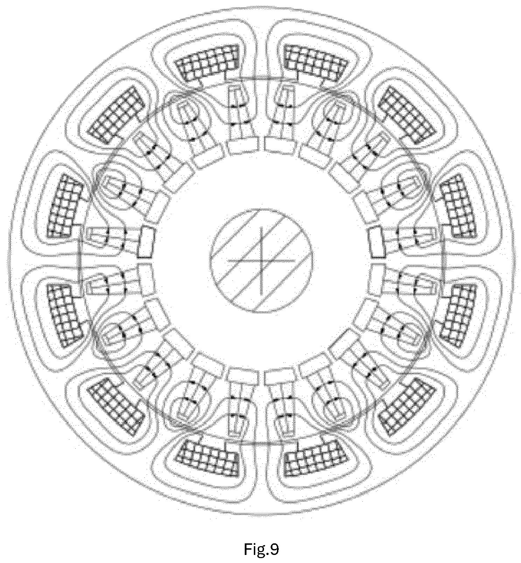

The magnetic force line distribution of the above permanent magnet electric motor is shown in FIG. 9, which is exactly the same as that of Embodiment 1.

The performance of the above permanent magnet electric motor is the same as that of Embodiment 1.

It should be noted that the directional words mentioned in these embodiments and the present disclosure, such as left and right, are only used for the convenience of explanation, and they are only for the specific orientation determined during the description. It does not constitute a limitation on the content and protection scope of the present disclosure.

## Claims

1. A permanent magnet electric motor having reduced cogging torque ripple, comprising a stator component, permanent magnets and a rotor component,
wherein the rotor component is mounted in a center of the stator component, and an air gap is formed between an outer circumferential surface of the rotor component and an inner cambered surface of the stator component;
wherein each permanent magnet has a cross-section of isosceles trapezoid, the permanent magnet is fixed in the rotor component and has a central line coinciding with a radius line of the rotor component, the magnetic lines of the permanent magnet are symmetric with reference to the central line of the permanent magnet and form included angles of 90° with a left side face of the trapezoid or a right side face of the trapezoid of the permanent magnet, and the left side face of the trapezoid and the right side face of the trapezoid of the permanent magnet respectively form included angles with the central line of the permanent magnet.

2. The permanent magnet electric motor having reduced cogging torque ripple according to claim 1, wherein the included angles formed by the left side face of the trapezoid and the right side face of the trapezoid of the permanent magnet with the central line of the permanent magnet are 10 to 45°.

3. The permanent magnet electric motor having reduced cogging torque ripple according to claim 2, wherein the included angles formed by the left side face of the trapezoid and the right side face of the trapezoid of the permanent magnet with the central line of the permanent magnet are 18°.

4. The permanent magnet electric motor having reduced cogging torque ripple according to claim 1, wherein the permanent magnets are fixed in trapezoidal slots of the rotor component.

5. The permanent magnet electric motor having reduced cogging torque ripple according to claim 4, wherein the left side face of the trapezoid and the right side face of the trapezoid of the permanent magnet are respectively attached and fixed to a left side face and a right side face of the trapezoidal slot of the rotor component.

6. The permanent magnet electric motor having reduced cogging torque ripple according to claim 5, wherein the left side face of the trapezoid and the right side face of the trapezoid of the permanent magnet are respectively adhered to a left side face and a right side face of the trapezoidal slot of the rotor component through an adhesive.

7. The permanent magnet electric motor having reduced cogging torque ripple according to claim 4, wherein a top window and a bottom window are respectively provided at a top and a bottom of the trapezoidal slot of the rotor component.

8. The permanent magnet electric motor having reduced cogging torque ripple according to claim 5, wherein a top window and a bottom window are respectively provided at a top and bottom of the trapezoidal slot of the rotor component.

9. The permanent magnet electric motor having reduced cogging torque ripple according to claim 1, wherein the permanent magnet is of a split structure, is split along the central line, and is composed of a left part of the permanent magnet and a right part of the permanent magnet.

10. The permanent magnet electric motor having reduced cogging torque ripple according to claim 1, wherein the permanent magnets include N-pole permanent magnets and S-pole permanent magnets, and the N-pole permanent magnets and the S-pole permanent magnets are alternately fixed in the rotor component.
